# EUROPÄISCHE PATENTSCHRIFT

(11) **EP 1 652 421 B1**
(45) Veröffentlichungstag und Bekanntmachung des Hinweises auf die Patenterteilung: **28.05.2008**
(21) Anmeldenummer: 05109722.8
(22) Anmeldetag: 19.10.2005
(51) Int. Cl.: A01D 41/127, A01D 43/08, G01F 1/20

(54) **Erntemaschine mit einer Messeinrichtung zur Erfassung des Durchsatzes aufgenommenen und/oder bearbeiteten Ernteguts**
Harvesting machine with a measuring device to determine the yield of harvested and/or processed crop
Moissonneuse avec équipement de mesurage pour l'acquisition du débit du produit de récolte

(30) Priorität: 30.10.2004 DE 102004052446
(43) Veröffentlichungstag der Anmeldung: 03.05.2006
(73) Patentinhaber: DEERE & COMPANY, Moline, Illinois 61265-8098 (US)
(72) Erfinder: Correns, Nico, 99425 Weimar (DE); Rode, Michael, 07743 Jena (DE); Kormann, Dr. Georg, 66482 Zweibrücken (DE)
(74) Vertreter: Holst, Sönke

(56) Entgegenhaltungen:
- EP-A- 0 853 234
- EP-A- 0 856 723
- EP-A- 1 169 905
- US-A- 5 561 250
- US-A1- 2004 002 368

## Beschreibung

Die Erfindung betrifft eine Erntemaschine mit einer Messeinrichtung zur Erfassung des Durchsatzes aufgenommenen und/oder bearbeiteten Ernteguts, wobei die Messeinrichtung eine Messfläche, die mit dem Erntegut zusammenwirkt und an einer Lagerung derart beweglich abgestützt ist, dass ihre Position vom Durchsatz des Ernteguts abhängt, und eine optische Positionserfassungseinrichtung zur Erfassung der Position der Messfläche umfasst.

Im Stand der Technik werden zur Ertragsermittlung in Erntemaschinen unterschiedliche Bauarten von Sensoren verwendet. Beispiele sind Prallplatten oder rotierende Zellenräder am Auslass des Körnerelevators eines Mähdreschers (EP 0 208 025 A, US 6 584 424 B) oder Prallplatten im Austragkanal eines Feldhäckslers (EP 0 887 008 A), Gewichtssensoren zur Erfassung der auf Oberflächen, auf denen Erntegut gefördert wird, wirkenden Gewichtskraft (US 4 407 380 A, US 5 318 475 A, US 5 959 257 A, US 6 066 809 A, US 6 313 414 B), Sensoren zur Erfassung des Abstands von Vorpresswalzen (DE 195 24 752 A), Lichtschranken im Mähdrescherelevator (EP 0 856 723 A) oder radiometrische Absorptionsmessungen am Elevatorauslass (WO 85/00087 A). Bei den mechanischen Sensoren fließt das Erntegut entlang einer Oberfläche oder prallt auf sie auf, was zur Entstehung von Kräften, Impulsen oder Drehmomenten führt, die durch Potentiometer oder gemäß der EP 0 856 723 A durch Dehnungsmessgeräte oder optische Verschiebungssensoren in elektrische Signale umsetzbar sind. In der DD 267 650 A wird ein Piezokristall zur Umsetzung der auf ihn wirkenden Gewichtskraft des Ernteguts in ein elektrisches Signal verwendet.

Die EP 1 169 905 A beschreibt eine Durchsatzmesseinrichtung für einen Mähdrescher, bei der ein deformierbares Element zwischen einer mit dem Erntegut zusammenwirkenden Prallplatte und einer fest mit dem Rahmen des Mähdreschers verbundenen Verankerung angeordnet ist. Das deformierbar Element ist aus einem Metallblock hergestellt, in den zwei ausgerichtete Schlitze eingebracht wurden. Die Verformung des deformierbaren Elements wird mit einer Lastzelle erfasst.

Anhand einer Geschwindigkeitsmessung des Materials kann anschließend der Massendurchsatz pro Zeiteinheit bestimmt werden. Bei bekannter Dichte des Ernteguts kann der Volumendurchsatz abgeleitet werden.

Die genannten Sensoren weisen den Nachteil auf, dass zusätzliche Elemente in die Erntemaschine zu integrieren sind. Außerdem ist ihre Genauigkeit und Zuverlässigkeit in der in hohem Maße staub- und vibrationsbelasteten Umgebung einer Erntemaschine nicht immer hinreichend.

Die der Erfindung zu Grunde liegende Aufgabe wird darin gesehen, eine Messeinrichtung zur Erfassung des Durchsatzes in einer Erntemaschine aufzuzeigen, die sich ohne große bauliche Veränderungen einfügen lässt und eine hohe Auflösung aufweist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Messfläche ist in die Wand eines Förderkanals, durch den das Erntegut gefördert wird, integriert, d. h. sie wird durch einen Abschnitt der Wand des Förderkanals gebildet, so dass keine zusätzlichen Elemente in den Förderkanal einzufügen sind. Es wird eine Messfläche bereitgestellt, die durch ein durch Abschnitte der Wand des Förderkanals mit gegenüber dem übrigen Förderkanal stark reduzierter Materialstärke gebildetes Festkörpergelenk abgestützt ist. Das Festkörpergelenk stellt eine Vorspannkraft bereit, die die Messfläche in ihre Ruheposition vorspannt und erlaubt gleichzeitig kleine Bewegungen der Messfläche. Von der Erntemaschine aufgenommenes bzw. verarbeitetes Erntegut übt durch die Gewichtskraft bzw. bei einem Aufprall auf die Messfläche eine Kraft und/oder ein Drehmoment auf die Messfläche aus, welche dadurch gegen die Vorspannkraft ausgelenkt wird. Die Bewegungen der Messfläche liegen im nm-, µm- oder einstelligen mm-Bereich und werden durch eine hinreichend genau arbeitende optische Positionserfassungseinrichtung vorzugsweise in Form eines Laserinterferometers oder eines anderen optisch arbeitenden absoluten oder inkrementalen Wegmesssystems erfasst. Falls zur Berechnung des Durchsatzes, bei dem es sich um den Massen- oder Volumendurchsatz pro Zeiteinheit handeln kann, eine Information über die Materialgeschwindigkeit benötigt wird, kann diese direkt, z. B. mit Radar, oder anhand der jeweils geltenden Fördergeschwindigkeit bestimmt werden.

Ein Vorteil der Erfindung liegt darin, dass ein Massenstrom mit hoher Auflösung erfasst werden kann.

Die Erfindung eignet sich insbesondere zur Verwendung bei der Durchsatzerfassung an Erntemaschinen, wie Mähdreschern, Mähmaschinen, Feldhäckslern, Ballenpressen oder Ladewagen oder dazugehörigen Erntevorsätzen z. B. in Form von Pick-Ups, Maisgebissen oder -pflückern oder Schneidwerken. Die gemessenen Durchsatzwerte können georeferenziert kartiert werden.

In den Zeichnungen sind zwei nachfolgend näher beschriebene Ausführungsbeispiele der Erfindung dargestellt. Es zeigt:
- Fig. 1: eine Erntemaschine in Form eines Feldhäckslers,
- Fig. 2: eine schematische seitliche Ansicht einer Messeinrichtung für die Erntemaschine aus Figur 1,
- Fig. 3: eine Erntemaschine in Form eines Mähdreschers, und
- Fig. 4: eine schematische seitliche Ansicht einer Messeinrichtung für die Erntemaschine aus Figur 3.

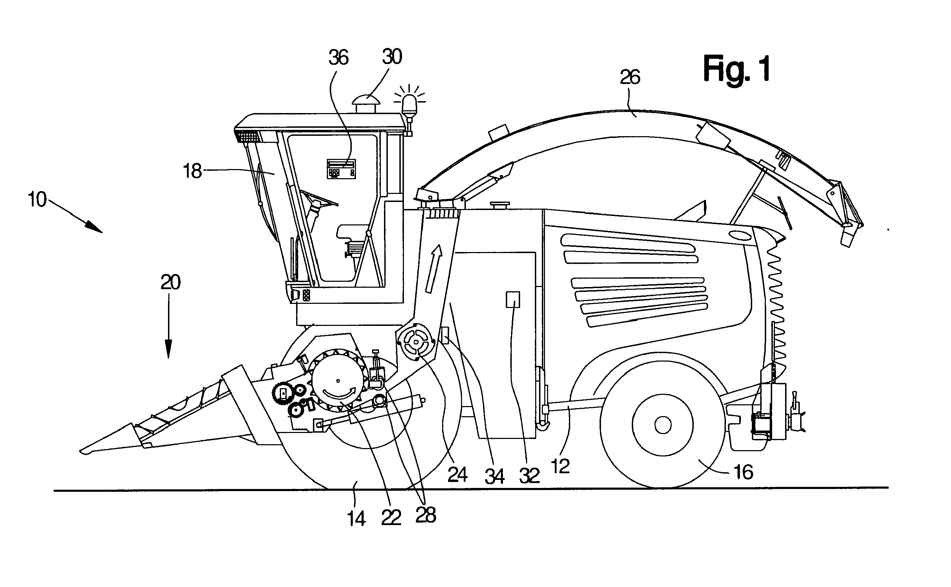

Eine in der Figur 1 gezeigte Erntemaschine 10 in der Art eines selbstfahrenden Feldhäckslers baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z. B. Mais, Gras oder dergleichen wird einer Häckseltrommel 22 zugeführt, die es in kleine Stücke häckselt und es einer Fördervorrichtung 24 aufgibt. Das Gut verläßt die Erntemaschine 10 zu einem nebenher fahrenden Anhänger über eine drehbare Austrageinrichtung 26. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird. Im Folgenden beziehen sich Richtungsangaben wie vorn und hinten auf die Vorwärtsrichtung der Erntemaschine 10.

An der Oberseite der Fahrerkabine 18 ist eine Antenne 30 zum Empfang der Signale von Satelliten des globalen Positionierungssystems (GPS) angeordnet, anstelle derer auch ein beliebiges anderes Positionsbestimmungssystem verwendbar ist. Eine Rechnereinrichtung 32 ist mit der Antenne 30 und einer Messeinrichtung 34 verbunden, die zur Erfassung des Erntegutdurchsatzes durch die Erntemaschine 10 dient. Die Erntegutdurchsätze werden von der Rechnereinrichtung 32 als Ertragskarten georeferenziert gespeichert und dem Bediener auf einer Anzeigeeinrichtung 36 dargestellt.

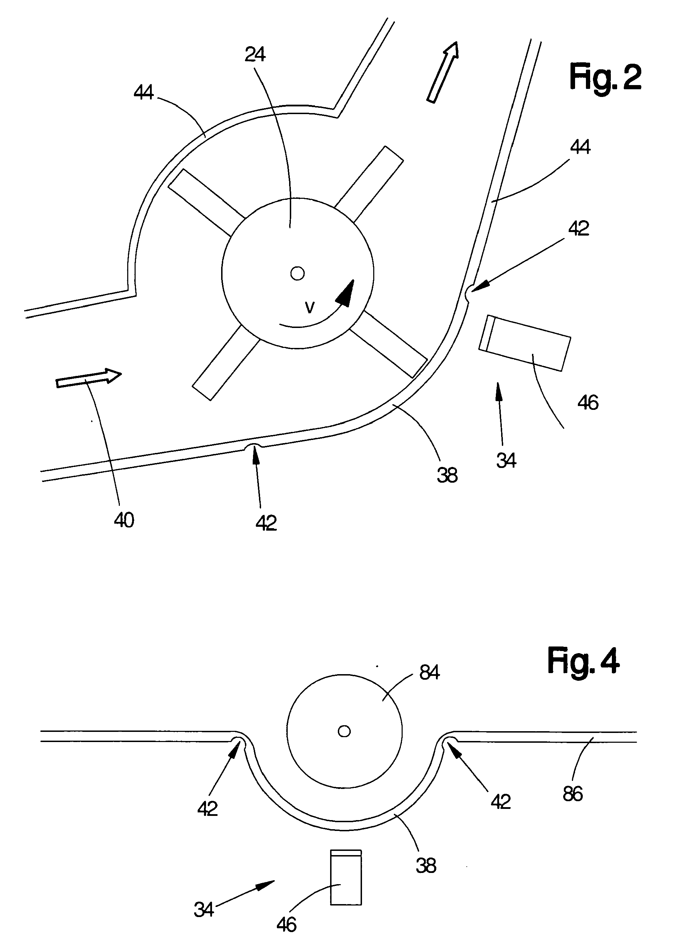

Die Messeinrichtung 34 bildet die Boden- und Rückwand eines vom Gehäuse 44 der Fördervorrichtung 24 geformten Förderkanals für das Erntegut und ist in der Figur 2 detaillierter dargestellt. Sie umfasst eine Messfläche 38 aus in sich starrem Material (Stahlblech), die an ihren in Strömungsrichtung des Materials, wie sie durch den Pfeil 40 dargestellt ist, vorderen und rückwärtigen Enden durch so genannte Festkörpergelenke 42 an der Bodenwand bzw. Rückwand des Gehäuses 44 befestigt ist. Die Festkörpergelenke 42 erstrecken sich jeweils über die gesamte Breite des Gehäuses 44 oder einen Teilbereich davon und werden durch Abschnitte der Wand des Gehäuses 44 mit gegenüber dem übrigen Gehäuse stark reduzierter Materialstärke gebildet. Die Herstellung der Festkörpergelenke 42 kann durch Materialabtrag oder -verformung erfolgen. Die seitlichen Ränder der Messfläche 38 können ebenfalls durch Festkörpergelenke mit der daneben liegenden Wand des Gehäuses 44 verbunden sein, oder es ist dort ein Trennschnitt vorgesehen.

Die Festkörpergelenke 42 spannen die Messfläche 38 in eine Ruheposition vor, erlauben jedoch bei auf die Messfläche 38 aufprallendem Erntegut eine mikroskopische Bewegung der Messfläche 38 gegenüber dem Gehäuse 40. Abhängig vom Materialdurchsatz bewegt sich der rückwärtige Abschnitt der Messfläche 38 nach hinten, während der vordere, etwa horizontal verlaufende Abschnitt sich dann nach unten bewegt. Die Bewegung der Messfläche 38 wird durch ein zur Messeinrichtung 34 gehöriges Laserinterferometer 46 erfasst, das mit der Rechnereinrichtung 32 verbunden ist. Letztere berechnet anhand des Signals vom Laserinterferometer 46 und ggf. anhand eines Drehzahlsignals bezüglich der Drehzahl der Fördervorrichtung 24 den aktuellen Durchsatz. Das Laserinterferometer wird zweckmäßigerweise bei nicht vorhandenem Erntegut auf einen Durchsatz von Null kalibriert; weitere Kalibrierungspunkte können bei anderen, durch andere Messungen (z. B. Wägung eines mit dem Erntegut beladenen Anhängers) bekannten Erntegutdurchsätzen aufgenommen werden. Die Kalibrierung auf Null kann auf eine Bedienereingabe hin oder automatisch wiederholt werden, wenn kein Erntegut vorhanden ist, was anhand des Betriebszustands der Erntemaschine oder durch geeignete Sensoren erfasst werden kann. Geeignete Laserinterferometer sind an sich bekannt und werden beispielsweise von der Carl Zeiss AG, Oberkochen, DE, unter der Bezeichnung Surfcom 3000 hergestellt und vertrieben.

Messeinrichtungen 34, wie sie in der Figur 2 dargestellt sind, können an beliebigen Positionen von Erntemaschinen angebracht werden, an denen Material umgelenkt wird, so dass die Messfläche 38 durch das aufprallende Material eine Kraft, einen Impuls oder ein Drehmoment erfährt. Bei der Erntemaschine 10 in Form des Feldhäckslers könnte eine derartige Messeinrichtung 34 auch an der Oberseite der Austrageinrichtung 26 angebracht werden, vorzugsweise in ihrem der Fördervorrichtung 24 nächsten Bereich. Bei einem Mähdrescher könnte sie eine Wand sein, gegen die ein Körnerelevator das saubere Korn wirft.

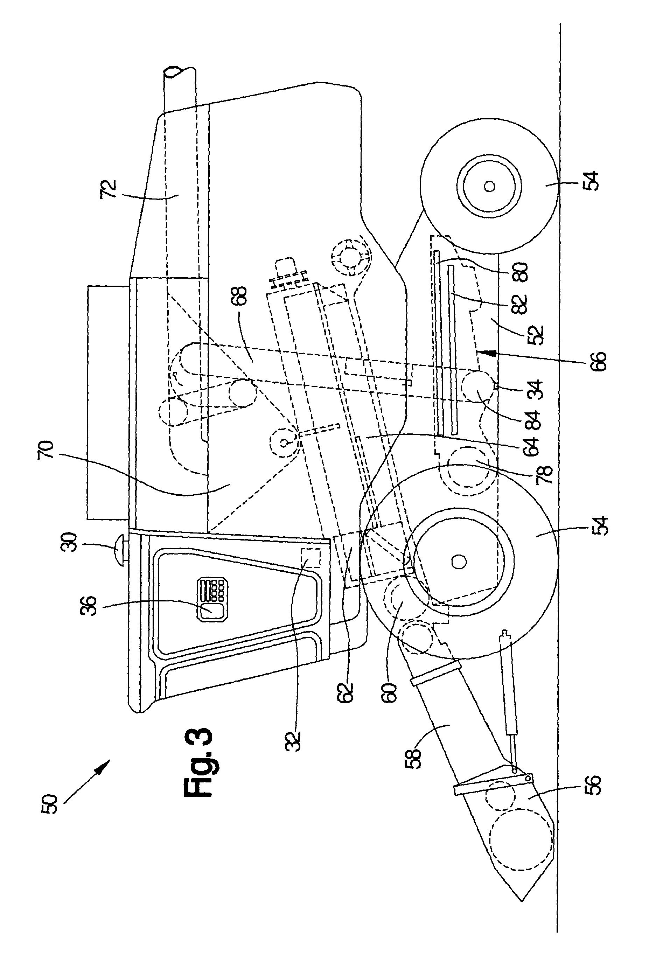

Die Figur 3 zeigt eine andere landwirtschaftliche Erntemaschine 50 in der Form eines Mähdreschers, der einen tragenden Aufbau 52 mit im Eingriff mit dem Erdboden befindlichen Rädern 54 aufweist. Ein Erntevorsatz 56 wird verwendet um Erntegut aufzunehmen und es einem Schrägförderer 58 zuzuführen. Das geerntete Gut wird vom Schrägförderer 58 einer Leittrommel 60 zugeführt. Die Leittrommel 60 führt das Gut nach oben durch einen Einlassübergangsabschnitt 62 einer drehbaren Gutbearbeitungseinheit 64 zu.

Die Gutbearbeitungseinheit 64 drischt und trennt das Erntegut.

Korn und Spreu fallen durch Roste an der Unterseite der Gutbearbeitungseinheit 64 in ein Reinigungssystem 66. Das Reinigungssystem 66 entfernt die Spreu und führt das saubere Korn einem Elevator 68 für sauberes Korn zu. Der Elevator 68 für sauberes Korn legt das saubere Korn in einem Korntank 70 ab. Das saubere Korn im Korntank 70 kann durch einen Entladeschneckenförderer 72 auf einen Kornwagen, Anhänger oder Lastwagen entladen werden. Der Betrieb der Erntemaschine 50 wird von einer Bedienerkabine aus gesteuert.

Das Reinigungssystem 66 umfasst einen Siebkasten und ein Reinigungsgebläse 78. Der Siebkasten umfasst einen Rahmen, der ein Obersieb 80 und ein Untersieb 82 hält. Die Siebe 80, 82 werden in eine Schwingbewegung versetzt. Das Reinigungsgebläse 78 erzeugt einen Luftstrom, der leichteres Material von den Sieben nach hinten aus der Erntemaschine 50 hinausbläst, während schwerere Partikel, insbesondere Korn, durch Öffnungen in den Sieben nach unten hindurchfallen. Ein Querförderer 84 in Form eines Schneckenförderers am Boden des Siebkastens führt das gereinigte Korn seitlich zusammen und übergibt es dem Elevator 68.

Auch die Erntemaschine 50 ist mit einer Messeinrichtung 34 versehen, die in der Figur 4 detailliert dargestellt ist, um den Gutdurchsatz zu erfassen. Auch sind eine Antenne 30, eine Rechnereinrichtung 32 und eine Anzeigeeinrichtung 36 vorgesehen, die in ihrem Aufbau und ihrer Funktion der Ausführungsform nach Figur 1 entsprechen.

Die Komponenten der in der Figur 4 dargestellten Messeinrichtung 34 entsprechen denen der Messeinrichtung 34 nach Figur 2. Die Messfläche 38 wird durch den den Querförderer 84 nach unten halbkreisförmig umschließenden Bereich des Bodenblechs 86 des Siebkastens gebildet und ist durch die Festkörperlager 42 mit dem Bodenblech 86 verbunden. Dieser Bereich bildet einen Förderkanal, in dem der Durchsatz erfasst wird. Auch hier kann sich die Messfläche 38 über die gesamte (in seitlicher Richtung betrachtete) Länge des Querförderers 84 oder einen Teilbereich davon erstrecken und an den in Fahrtrichtung linken und rechten Enden durch Festkörperlager 42 mit dem Bodenblech 86 verbunden oder durch Trennschnitte davon getrennt sein. Das vom Querförderer 84 geförderte Material (gereinigtes Korn) übt aufgrund der Schwerkraft eine Kraft auf die Messfläche 38 aus, die dementsprechend gegen die von den Festkörperlagern 42 bereitgestellte Vorspannkraft nach unten ausweicht. Die vertikale Position der Messfläche 38 wird durch das mit der Rechnereinrichtung 32 verbundene Laserinterferometer 46 erfasst. Zur Bestimmung des Durchsatzes ist die Rechnereinrichtung 32 mit einem Sensor zur Messung der Drehzahl des Querförderers 84 verbunden. Um Messfehler zu vermeiden, falls die Erntemaschine 50 an einem Hang arbeitet, können entsprechende Sensoren für die Neigung in Fahrt- und Seitenrichtung vorhanden sein, anhand deren Signale die Rechnereinrichtung 32 entsprechende Korrekturen durchführt. Die Messeinrichtung 34 könnte auch an einem Querförderer für die Überkehr (nicht eingezeichnet) oder am Boden des Korntanks 70 verwendet werden.

Die Messeinrichtung 34 gemäß Figur 4 kann an beliebigen Stellen verwendet werden, an denen Material über eine Oberfläche gefördert wird. Beispiele wären Einzugskanäle von Ballenpressen, Ladewagen oder anderen Erntemaschinen oder Bodenbleche von Erntevorsätzen.

Die Erntemaschinen 10 und 50 sind nicht stationär, sondern werden im Betrieb über ein Feld bewegt, das in der Regel kleinere oder größere Unebenheiten aufweist. Diese Unebenheiten führen, wie auch durch Arbeitselemente der Erntemaschinen 10, 50 (z. B. den Antriebsmotor oder andere rotierende Elemente) erzeugte Vibrationen auch zu Beschleunigungen der Messfläche 38. Durch die relativ starre Aufhängung am Festkörpergelenk 42 wird die Messfläche 38 weniger stark in Eigenschwingungen versetzt als konventionelle, durch Federkraft vorgespannte Messflächen, was die Messgenauigkeit verbessert.

Sollten die Vibrationen der Messfläche 38 dennoch stören, kann sie derart montiert und dimensioniert werden, dass jeder störenden Beschleunigung eine gleich große Beschleunigung mit umgekehrten Vorzeichen folgt. Über einen längeren Zeitraum heben sich die Messfehler gegenseitig auf. Alternativ oder zusätzlich kann eine mechanische Dämpfung der Messfläche 38 vorgesehen sein, z. B. durch ein Flüssigkeitsbad oder eine zusätzliche Masse, oder die Vibrationen werden bei der Auswertung der Signale der Messeinrichtung 34 kompensiert, insbesondere durch Filterung und/oder Durchschnittsbildung.

Bei höherer geforderter Messgenauigkeit könnte anstelle der bisher beschriebenen, eindimensional arbeitenden Messeinrichtung 34 eine Ausführungsform mit bis zu 6 Messachsen eingesetzt werden, um alle störenden Beschleunigungen ermitteln und bei der rechnergestützten Auswertung softwaremäßig kompensieren zu können. Für eine weitere Steigerung der Messgenauigkeit könnte auch das Prinzip einer Messbrücke verwendet werden. Zusätzlich zu der Positionsmesseinrichtung an der Messfläche 38 wird dabei eine identische Positionsmesseinrichtung an einem Referenzsystem montiert, das nicht in den Massenfluss integriert ist. Dieses Referenzsystem sollte möglichst nahe am eigentlichen Messsystem angebracht sein. Mit diesem Aufbau erfolgt eine mechanische wie auch eine thermische Kompensation von Umgebungseinflüssen. Ein Teil der zeitabhängigen Veränderungen im Massenflussmesssystem wird ebenfalls kompensiert.

## Patentansprüche

1. Erntemaschine (10, 50) mit einer Messeinrichtung (34) zur Erfassung des Durchsatzes aufgenommenen und/oder bearbeiteten Ernteguts, wobei die Messeinrichtung (34) eine Messfläche (38), die mit dem Erntegut zusammenwirkt und an einer Lagerung derart beweglich abgestützt ist, dass ihre Position vom Durchsatz des Ernteguts abhängt, und eine optische Positionserfassungseinrichtung zur Erfassung der Position der Messfläche (38) umfasst, **dadurch gekennzeichnet, dass** die Messfläche (38) in eine Wand eines Förderkanals für das Erntegut integriert ist und dass die Lagerung ein durch Abschnitte der Wand des Förderkanals mit gegenüber der Wand des übrigen Förderkanals stark reduzierter Materialstärke gebildetes Festkörpergelenk (42) ist.

2. Erntemaschine (10) nach Anspruch 1, **dadurch gekennzeichnet, dass** die Positionserfassungseinrichtung ein Laserinterferometer (46) ist.

3. Erntemaschine (10, 50) nach einem der vorhergehenden Ansprüche, **dadurch gekennzeichnet, dass** das Erntegut an der Oberseite der Messfläche (38) entlang strömt, so dass die Messfläche (38) mit der Gewichtskraft des Ernteguts beaufschlagt wird und/oder durch die Messfläche (38) eine Umlenkung erfährt.

## Claims

1. Harvesting machine (10, 50) with a measuring device (34) to determine the yield of harvested and/or processed crop, wherein the measuring device (34) comprises a measuring surface (38) which interacts with the crop and is supported movably on a mounting in such a manner that its position depends on the crop yield, and an optical position-determining device for determining the position of the measuring surface (38), **characterized in that** the measuring surface (38) is integrated in a wall of a conveying channel for the crop, and **in that** the mounting is a solid-body joint (42) which is formed by sections of the wall of the conveying channel of greatly reduced material thickness in comparison to the wall of the rest of the conveying channel.

2. Harvesting machine (10) according to Claim 1, **characterized in that** the position-determining device is a laser interferometer (46).

3. Harvesting machine (10, 50) according to one of the preceding claims, **characterized in that** the crop flows along the upper side of the measuring surface (38) such that the measuring surface (38) is subjected to the weight of the crop and/or the measuring surface (38) undergoes a deflection.

## Revendications

1. Machine de récolte (10, 50) comportant un dispositif de mesure (34) destiné à détecter le débit des végétaux ramassés et/ou traités, le dispositif de mesure (34) comportant une surface de mesure (38), qui coopère avec les végétaux récoltés et prend appui de manière mobile sur un palier, de telle sorte que sa position dépend du débit des végétaux, et un dispositif optique de détection de la position, destiné à détecter la position de la surface de mesure (38), **caractérisée en ce que** la surface de mesure (38) est intégrée dans une paroi d'un conduit de transport des végétaux, et **en ce que** le palier est une articulation monolithique (42), formée par des parties de la paroi du conduit de transport et ayant une épaisseur de matière très inférieure à celle de la paroi du conduit de transport.

2. Machine de récolte (10) selon la revendication 1, **caractérisée en ce que** le dispositif de détection de la position est un interféromètre à laser (46).

3. Machine de récolte (10, 50) selon l'une quelconque des revendications précédentes, **caractérisée en ce que** les végétaux circulent le long du côté supérieur de la surface de mesure (38), de telle sorte que la surface de mesure (38) est sollicitée par le poids des végétaux, et/ou subissent une déviation due à la surface de mesure (38).
